# EUROPEAN PATENT APPLICATION

(11) **EP 3 106 342 A1**
(43) Date of publication of application: **21.12.2016**
(21) Application number: 15382327.3
(22) Date of filing: 19.06.2015
(51) Int. Cl.: B60K 35/00

(54) **METHOD FOR THE PRESENTATION OF INFORMATION RELATING TO THE ACCOMPLISHMENT OF AN OBJECTIVE IN AN OPERATION OF DRIVING A VEHICLE**

(71) Applicant: Seat, S.A., 08760 Martorell (ES)
(72) Inventor: Baños Serradilla, Víctor, 08760 Barcelona (ES); Bayona Margarit, Teresa, 08760 Barcelona (ES); López Jiménez, Toni, 08760 Barcelona (ES); Vázquez Iglesias, Rodrigo Germán, 08760 Barcelona (ES)
(74) Representative: Isern-Jara, Nuria

(57) **Abstract**

Method for the presentation of information (2) relating to the accomplishment of an objective in an operation of driving a vehicle (5), wherein an image is displayed on a graphic display device (1) by means of a control device (4), an instantaneous parameter (100) of the vehicle (5) being gathered by the control device (4) and being displayed on the graphic display device (1), a second state of the average parameter (105) being applied on the second surface (332) based on the third predefined value (103), such that the first state of the average parameter (105) applied on the first surface (331) and the second state of the average parameter (105) applied on the second surface (332) are substantially equal, rendering that a user be capable of rapidly perceiving the degree of compliance with said objective without hardly diverting attention from the task of driving itself.

## Description

### OBJECT OF THE INVENTION

The present patent application has as object thereof a method for the presentation of information relating to the accomplishment of an objective in an operation of driving a vehicle, according to claim 1, incorporating notable innovations and advantages.

### BACKGROUND OF THE INVENTION

In the state of the art there are diverse solutions known of procedural methods for the presentation of information relating to the quality of driving a vehicle.

Thus there is known in the state of the art, as revealed in the document US 20140095214, a system and method for providing a platform for monitoring the performance of driving. The platform includes the reception of the data associated with the performance of a driver wherein the driver is associated with a client of the driving platform, the analysis of the data to determine a measure of performance of the driving, and the report on the degree of good driving. It furthermore divulges the interfaces of the platform with the native systems of the client to provide a secure integrated platform capable of implementing and managing a product monitoring the performance of driving, of secure use.

There is also known in the state of the art, as revealed in the document US 8604920, a method of operating a system of driver analysis, including the method of receiving data of operation of vehicles corresponding to the operation of the vehicles by the drivers, the identification of a data group associated with a driving objective, the processing of the at least one part of the data of operation of the vehicle to determine the driving performance of the driver with respect to the performance of the driving data group, generating a driving report identifying the driving ability of the driver, transferring the driving report to a target device to be seen by the driver. Consequently, there is divulged a method of gathering data of the quality of driving of several drivers. The data is processed by means of the Internet, there being returned to the drivers a report including a comparison with respect to the remainder of the associated members.

There is furthermore known in the state of the art, as revealed in the document US 8502654, a system of display of information relating to the operation of a vehicle. The information screen transmits a points score representing the driving over time or the efficiency of operation of the vehicle. The points score may be transmitted numerically or graphically, utilising a number of indicators, or both. Each indicator may correspond to a different level of accomplishment achieved for the efficient driving or use of the vehicle. The patent is focused on the calculation of the estimate of points according to the quality of driving of the driver in conformity with some predefined values. In relation to the graphic representation of said points, the possibility is included of showing indicators both of efficiency and of economy. Said indicators increase or decrease as a function of better or poorer driving.

Consequently, it may be observed that there still exists a need for a method for the presentation of information relating to the accomplishment of an objective in an operation of driving a vehicle such that a user is capable of perceiving, with a rapid look, the degree of satisfaction of said objective without hardly diverting the attention from the driving task itself.

### DESCRIPTION OF THE INVENTION

In accordance with the present invention, this task is solved by means of a method for the presentation of information relating to the accomplishment of an objective in an operation of driving a vehicle according to claim 1. Additional advantages of the invention are presented, accompanying the characteristics included in the dependent claims, reference whereto is made in the description summarised below.

The method of the present invention lies within a context of gamification in the driving of the vehicle. By gamification there is understood the use of techniques and dynamics characteristic of games and pastimes in non-recreational activities, in this manner converting an activity a priori monotonous into another activity motivating the person to participate therein, prizes being awarded for certain accomplishments during the activity. Consequently, the objective of the function performed by the method of the present invention is that the user shall utilise the application in a continuous manner having the purpose of achieving constancy.

Gamification in the case of the present invention resembles the realisation of a game by means of challenges of efficient driving having the purpose that the user learns and improves the driving thereof in terms of fuel saving. The problem arising in said context is that said games include providing the user with a large quantity of information. By virtue of the fact that the use of the application of information technology whereupon the present method is executed is during the driving, the presentation is sought of a simple interface but which, however, at the same time provides all the information required. In this manner the transfer is achieved to the driver of the vehicle of all the information required to improve the efficient driving thereof in a simple and understandable manner, permitting that by means of a rapid look the driver is capable of perceiving it, whilst being a safe method for driving.

Consequently, the present invention consists of a method for the presentation of information relating to the accomplishment of an objective in an operation of driving a vehicle, wherein:
- an image is displayed on a graphic display device by means of a control device,
- an instantaneous parameter of the vehicle is gathered by the control device and displayed on the graphic display device,
- at least a first predefined value, a second predefined value and a third predefined value are stored in the control device,
- an average parameter relating to the instantaneous parameter and to the third predefined value is calculated in the control device,
- the accomplishment of the objective in an operation of driving a vehicle is that a comparison between the average parameter and the first predefined value satisfies some requirements previously defined in the control device based on the second predefined value,
- an item of information is displayed in a first area comprising at least a first surface and a second surface, in such manner that the first surface and the second surface are concentric,
- a first state of the average parameter is applied on the first surface based on the average parameter, the first predefined value and the third predefined value,
- a second state of the average parameter is applied on the second surface based on the third predefined value, such that the first state of the average parameter applied on the first surface and the second state of the average parameter applied on the second surface are substantially equal.

More specifically, by means of the term instantaneous parameter reference is preferentially made to the reading in real time of the variable subject of the accomplishment of an objective. It is consequently a real measurement. By means of the first predefined value reference is preferentially made to a value and/or interval of the variable subject of the accomplishment of an objective, e.g. a level of consumption of 5 litres at 100 km/h, or an interval of revolutions of between 2000 rpm and 3000 rpm. By means of the second predefined value reference is preferentially made to the duration wherein the variable subject of the accomplishment of an objective must be gathered and/or measured, whether for example being a period of time (e.g. 15 minutes), or a spatial distance (e.g. 100 km). By means of the third predefined value reference is preferentially made to the predefined time between change of states of the surfaces of the first area, e.g. 10 secs. By means of the term average parameter reference is preferentially made to the average of the values of the instantaneous parameters.

Furthermore, the average parameter makes reference to the average of instantaneous values calculated in the period established by the third predefined value. This calculation of the average parameter is realised by the control device.

It is specified that both the first predefined value, the second predefined value and the third predefined value are values programmed in the phase of manufacture of the vehicle, prior to the sale thereof. They may also be modified in subsequent software updates. In all cases it is a matter of a parameter not manipulable by the driver.

In an illustrative manner, the accomplishment of the objective in an operation of driving the vehicle is achieved when the average parameters calculated during the period of achievement of the accomplishment, that is to say during the second predefined value, lie within some limits previously stored in the first predefined value. Consequently, and as an example of what may be some of the accomplishments of a driving objective permitting training the user in an improvement in efficient driving, there may be cited the achievement of an average consumption below a predefined value, not exceeding a predefined instantaneous consumption, not exceeding a predefined value of rpm or revolutions per minute, realisation of accelerations or decelerations below a predefined value, realisation of changes of gear below a predefined value of engine revolutions per minute... All the cited accomplishments permit inculcating in the driver driving habits promoting energy efficiency and fuel saving during driving.

From the foregoing it is derived that, by means of the present invention, easier monitoring by the driver of the degree of achievement of an accomplishment in the driving task thereof is rendered possible. Specifically, the image displayed comprises, in the first area thereof, a first and a second concentric surfaces, each whereof in a given state, preferentially a colour, such that subsequent to the elapsement of a given period of time, contained in the third predefined value, said first and second surfaces change state, particularly in colour.

Furthermore, the first state of the average parameter applied on the first surface disappears based on the third predefined value. That is to say that the preferentially colour of the first surface is replaced by one being more current, in accordance with the comparison between the average parameter and the first predefined value in the following third predefined value, providing in this manner a sensation to the user of the vehicle of updating in real time of the image displayed, as a function of the quality of driving thereof.

More specifically, the first surface adopts a first state as a function of the comparison between the average parameter and the first predefined value, that is to say as a function of the quality of achievement of the accomplishment. Subsequently, the first state of the average parameter is applied on the second surface once the third predefined value has elapsed. Consequently, said change occurs in the sense of transferring the state or colour of the first surface to the second surface on the expiry of every period of time contained in the third predefined value. As an alternative to the change of colour applied on the surface, with the objective of representing the degree of achievement of an accomplishment, there may be utilised a scale of different intensities, different tonalities, the application of various patterns on the surfaces.

In other words, the external ring of the image displayed shows in real time, with a maximum delay of the period of time contained by the third predefined value, the quality of the driving of the user as a function of the greater or lesser approximation thereof to the accomplishment of the predetermined objective. This is perceived preferentially through the state applied on the surfaces and through the evolution of the type of state over time towards the successive external rings (third, fourth or successive surfaces) of the first area of the image displayed.

Advantageously, the first concentric surface is the closest to the geometric centre of the first area. In this manner, the evolution of the state or preferentially colour undergoes a spatial evolution from the centre to the radially more distant zones of the image displayed. Consequently, the most updated state is applied on the zone of the first area closest to the geometric centre. In the subsequent zones of the first area are shown the states achieved by the user in the previous intervals of time defined by the third predefined value. In the manner of an example, a colour applied on the most internal zone of the first area is copied to the following more distant zone from the centre once the third predefined value has elapsed. This colour shall be subsequently copied to the following more distant zone, there having elapsed a further third predefined value, and in this manner successively every third value.

In accordance with another aspect of the invention, the application of a state on the first surface based on the average parameter, the first predefined value and the third predefined value, and the application of a state on the second surface based on the third predefined value, are repeated periodically. In this manner, the obtainment of a state to be applied on the first surface is realised every third predefined value as a result of the comparison between the average parameter and the first predefined value. As aforestated, once a third predefined value has elapsed, the state of the first surface is applied on the second surface replacing the preceding state thereof. Consequently, the changes of state, from the first to the second surface, and in the case of the existence of surfaces additional to the first surface, occur successively with every period of time, having the effect of the sensation to the user of the vehicle of the real time updating of the image displayed as a function of the quality of driving thereof. As a consequence, the user is capable of perceiving the quality wherewith he is facing the challenge with a rapid look, without the necessity of realising complex interpretations, reading numbers.

In a preferred embodiment of the invention, a second area and/or a third area are concentric to the first area about a geometric centre. In this manner, the entire image displayed presents a unity, embracing in a single group all the information relating to the accomplishment of an objective of an operation of driving, facilitating the rapid interpretation by the user driver of the automobile vehicle of the information shown.

In another preferred embodiment of the invention, the third area is the closest to the geometric centre and the first area is the most distant from the geometric centre. In this manner there is established an order in the information shown in the image displayed, the central part being that reserved for showing a type of numerical information, and the external part being that reserved for showing a temporal evolution by means of the states applied on the surfaces.

According to a further aspect of the invention, the second area comprises a radial band being displaced in a clockwise direction on the surface in a manner proportional to the second predefined value. As aforestated, said second predefined value refers, preferentially, to the temporal or spatial duration of achievement of the accomplishment, such that the radial band shows the progress in the realisation of the accomplishment, providing rapid information to the user driver in terms of how much has been taken up in attempting the accomplishment and how much remains to complete the attempt to achieve the accomplishment. In other words, it indicates the progress and the proportion between the period consumed and that remaining to finalise the objective of the accomplishment, the radial band advancing until completing the entire ring.

Preferentially, a commencement and an end of the displacement of the radial band are coincident, providing the intuitive visual impression to the user driver of completing the progress of the accomplishment when the circuit is closed, reaching the point wherefrom the radial band commenced being displaced.

According to yet another aspect of the invention, the radial band comprises a degradation. Said degradation refers to a trail left by the radial band on the passage thereof. Said degradation is of maximum clarity and/or intensity the closer it is to the radial band and of lesser clarity and/or intensity the further it is from the band. It is specified that it is understood that the degradation increases progressively when the intensity of the trail following the radial band diminishes. Consequently, in a mode of embodiment the trail advances clockwise, according to the radial band, whilst the degradation does so anticlockwise and in a manner proportional to the second predefined value. In this manner, both the trail and the degradation assist the user in perceiving the direction of rotation of the radial band, providing a sensation of progress, permitting the user to rapidly interpret the significance of the radial band.

In another preferred embodiment of the invention, the third area comprises the instantaneous parameter of the vehicle. In this manner the user driver may read, in a swift manner, the readout in real time of the variable subject of the accomplishment of an objective. Alternatively, the third area comprises the average parameter obtained from the instantaneous parameter during every third predefined value.

Advantageously, the information additionally comprises a number of accomplishments realised, in this manner permitting the user driver of the vehicle to view the previous results thereof, having the aforestated effect of trustworthiness.

Preferentially, the information additionally comprises an access to a main menu and/or an access to a previous screen and/or an access to cancel the course of the accomplishment, in this manner offering additional benefits of flexibility in terms of the handling of the graphic display device.

In the drawings attached there are shown, in terms of a non-limitative example, the elements whereupon is based the method of presentation of information relating to the accomplishment of an objective in an operation of driving a vehicle, constituted according to the invention. Other characteristics and advantages of said method for the presentation of information relating the accomplishment of an objective in an operation of driving a vehicle, object of the present invention, will be evident from the description of a preferred, however non-exclusive, embodiment illustrated in terms of a non-limitative example in the drawings attached, wherein:

### BRIEF DESCRIPTION OF THE DRAWINGS

Figure 1 is a general frontal perspective view of the interface of the automobile vehicle with the user on the instrument panel, according to the present invention.
Figure 2 is a schematic representation of the elements and systems of the automobile vehicle involved in the realisation of the present invention.
Figure 3 is a first view of a manner of representation of the image comprising a plurality of areas and/or concentric surfaces each whereof is destined to show one or other item of information, according to the present invention.
Figure 4 is a second view of a manner of representation of the image comprising a plurality of areas and/or concentric surfaces each whereof is destined to show one or other item of information, according to the present invention.

### DESCRIPTION OF A PREFERENTIAL EMBODIMENT

From the aforementioned figures, and in conformity with the numbering adopted, there may be observed therein an example of preferential embodiment of the invention comprising the parts and elements shown and described in detail below.

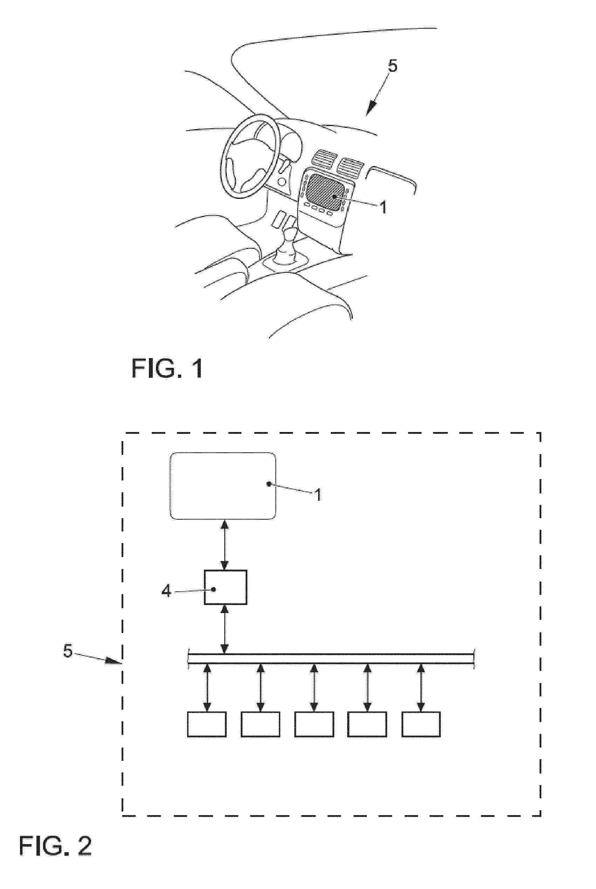

More specifically, as may be observed in figures 1, 2 and 3, the invention comprises the method for the presentation of information 2 relating to the accomplishment of an objective in an operation of driving a vehicle 5, wherein:
- an image is displayed on a graphic display device 1 by means of a control device 4,
- an instantaneous parameter 100 of the vehicle 5 is gathered by the control device 4 and is displayed on the graphic display device 1,
- at least one first predefined value 101, one second predefined value 102 and one third predefined value 103 are stored in the control device 4,
- an average parameter 105 relating to the instantaneous parameter 100 and to the third predefined value 103 is calculated in the control device 4,
- the accomplishment of the objective in an operation of driving a vehicle 5 is that a comparison between the average value 105 and the first predefined value 101 satisfies some requirements previously defined in the control device 4 based on the second predefined value 102.
- an item of information 2 is displayed in a first area 33 comprising at least a first surface 331 and a second surface 332, such that the first surface 331 and the second surface 332 are concentric.
- a first state of the average parameter 105 is applied on the first surface 331 based on the average parameter 105, the first predefined value 101 and the third predefined value 103.
- a second state of the average parameter 105 is applied on the second surface 332 based on the third predefined value 103, such that the first state of the average parameter 105 applied on the first surface 331 and the second state of the average value 105 applied on the second surface 332 are substantially equal.

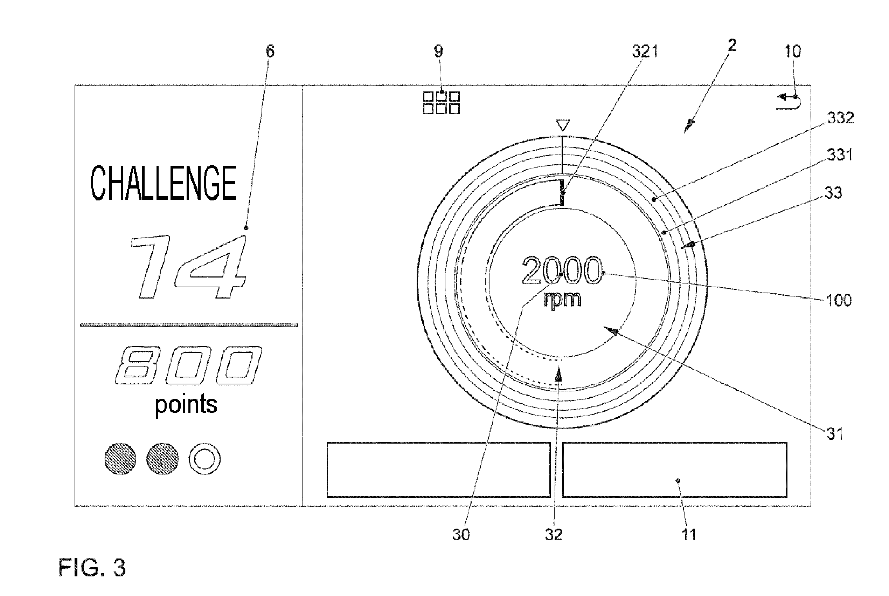

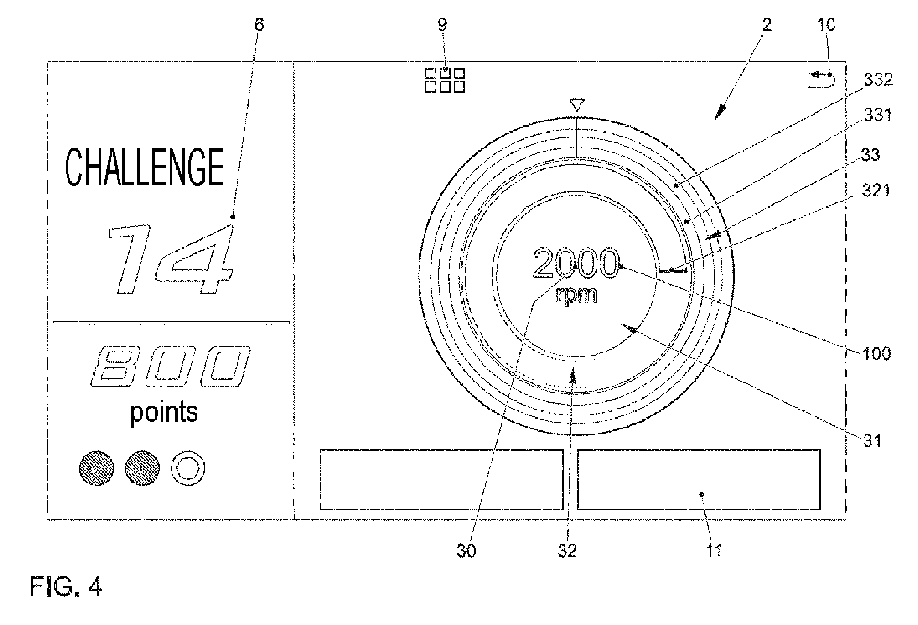

Additionally, as may be observed in figures 3 and 4, the first state of the average parameter 105 applied on the first surface 331 disappears based on the third predefined value 103.

Furthermore, as may be observed in figures 3 and 4, the first concentric surface 331 is the closest to the geometric centre of the first area 33.

More particularly, as may be observed in figures 3 and 4, the application of a state on the first surface 331 based on the average parameter 105, the first predefined value 101 and the third predefined value 103, and the application of a state on the second surface 332 based on the third predefined value 103, are repeated periodically on the basis of a third predefined value 103.

Consequently, according to the mode of preferential embodiment shown in figure 3, a first state based on a colour is calculated as result of the comparison between the average parameter 105 and the first predefined value 101. The first state is applied on the first surface 331. Subsequently, every third predefined value 103, a new calculation of the first state is realised and is applied on the first surface 331. In parallel, at the end of every third predefined value 103, the state applied on the first surface 331 is copied and applied on the second surface 332. In terms of example, when an average parameter 105 calculated during a given third predefined value 103 satisfies in a clear manner the accomplishment provided by the first predefined value 101, the state applied on the first surface 331 is a green colour. If the comparison barely satisfies the accomplishment provided by the first predefined value 101, the state applied on the first surface 331 would be an orange colour. If the comparison does not satisfy him the accomplishment provided by the first predefined value 101, the state applied on the first surface 331 would be a red colour.

To increase the perception on the part of the client, and the evolution of the driving thereof, the first area 33 comprises four surfaces. In this manner, there having elapsed a third predefined value 103, a first state calculated and applied on the first surface 331 will be copied onto the second surface 332. Subsequently, there having elapsed a new third predefined value 103 the first state will be copied onto a third surface. Subsequently, there having elapsed a new third predefined value 103 the first state will be copied onto a fourth surface. Following the obtainment of a new third predefined value 103, the first state disappears from the display. Said process is repeated periodically every third predefined value 103 for the calculations and applications of the successive posterior states on the surfaces of the first area 33.

According to a further preferential embodiment of the invention, as may be observed in figures 3 and 4, a second area 32 and/or a third area 31 are concentric to the first area 33 about the geometric centre 30.

According to a yet further preferential embodiment of the invention, as may be observed in figures 3 and 4, the third area 31 is the closest to the geometric centre 30 and the first area 33 is the most distant from the geometric centre 30.

It is specified that, as may be observed in figures 3 and 4, the second area 32 comprises a radial band 321 being displaced in a clockwise direction on the surface 32 in a manner proportional to the second predefined value 102.

Preferentially, as may be observed in figure 3, a commencement and an end of the displacement of the radial band 321 are coincident. Thus, the radial band 321 of figure 3 is showing the end of an accomplishment of an objective in an operation of driving by virtue of the fact that the surfaces of the first area 33 have states applied. The position of the radial band 321 of figure 3 is the same for the commencement of an accomplishment of an objective however, on the contrary, the surfaces of the first area 33 would not have states applied, these latter being calculated and applied based on the driving of the user in the intervals provided by the third predefined value 103.

It is specified that, as may be observed in figure 4, the radial band 321 is comprised in an intermediate position between the coincident initial and final positions. Thus, the user may interpret in a very rapid and comprehensible manner the duration utilised and the duration remaining of the accomplishment of the objective.

Additionally, as may be observed in figures 3 and 4, the radial band 321 comprises a degradation indicating the direction of displacement of the radial band 321, in order that the user may know the duration utilised and remaining of the accomplishment of the objective.

More specifically, as may be observed in figures 3 and 4, the third area 31 comprises the instantaneous parameter 100 of the vehicle 5. Preferentially, it indicates numerically the time, distance, engine revolutions, instantaneous consumption of the system of propulsion, or attempts remaining and/or realised... Thus, apart from, for example, the speed and the distance, cumulative magnitudes may also be shown such as, for example, the number of gear changes realised with respect to the total of the accomplishment of the challenge (e.g. 5/10).

In addition, as may be observed in figures 3 and 4, the information 2 comprises additionally a number of accomplishments 6 realised.

According to yet another aspect of the invention, as may be observed in figures 3 and 4, the information 2 comprises additionally an access to a main menu 9 and/or an access to a previous screen 10 and/or an access to cancel the course of the accomplishment 11.

Additionally, as may be observed in figures 3 and 4, the information 2 also comprises the data of the numerical value of the cumulative total of points of the challenge, by virtue of the fact that said numerical value varies over time. This value may increase or decrease as a function of the degree of achievement of the accomplishment of the objective in the operation of driving.

Furthermore, as may be observed in figures 3 and 4, the information 2 comprises additionally a graphic indication of three positions activated or not. Preferentially, they are three circles infilled or not. The activation or not of said three positions suggests a greater or lesser degree of achievement of the accomplishment, in a manner similar to the obtainment of bronze, silver and gold medals, in previous attempts at an accomplishment of a concrete objective.

The details, the shapes, the dimensions and other ancillary elements, together with the components employed in the implementation of the method for the presentation of information relating to the accomplishment of an objective in an operation of driving a vehicle, may be conveniently substituted by others being technically equivalent and not departing from the essentiality of the invention nor from the scope defined by the claims included following the list below. Moreover, the present invention covers all the possible combinations of particular and preferred embodiments indicated in this description.

### List of numerical references:

- 1: graphic display device
- 100: instantaneous parameter
- 101: first predefined value
- 102: second predefined value
- 103: third predefined value
- 105: average parameter
- 2: information
- 30: geometric centre
- 31: third area
- 32: second area
- 321: radial band
- 33: first area
- 331: first surface
- 332: second surface
- 4: control device
- 5: vehicle
- 6: number of accomplishments
- 9: access to a main menu
- 10: access to a previous screen
- 11: access to cancel

## Claims

1. Method for the presentation of information (2) relating to the accomplishment of an objective in an operation of driving a vehicle (5), wherein:
- an image is displayed on a graphic display device (1) by means of a control device (4),
- an instantaneous parameter (100) of the vehicle (5) is gathered by the control device (4) and is displayed on the graphic display device (1),
- at least a first predefined value (101), a second predefined value (102) and a third predefined value (103) are stored in the control device (4),
- an average parameter (105) relating to the instantaneous parameter (100) and to the third predefined value (103) is calculated in the control device (4),
- the accomplishment of the objective in an operation of driving a vehicle (5) is that a comparison between the average parameter (105) and the first predefined value (101) satisfies some requirements previously defined in the control device (4) based on the second predefined value (102),
- an item of information (2) is displayed in a first area (33), comprising at least a first surface (331) and a second surface (332), in such manner that the first surface (331) and the second surface (332) are concentric,
- a first state of the average parameter (105) is applied on the first surface (331) based on the average parameter (105), the first predefined value (101) and the third predefined value (103),
- a second state of the average parameter (105) is applied on the second surface (332) based on the third predefined value (103), such that the first state of the average parameter (105) applied on the first surface (331) and the second state of the average parameter (105) applied on the second surface (332) are substantially equal.

2. Method for the presentation of information (2) relating to the accomplishment of an objective in an operation of driving a vehicle (5) according to claim 1, **characterised in that** the first state of the average parameter (105) applied on the first surface (331) disappears based on the third predefined value (103).

3. Method for the presentation of information (2) relating to the accomplishment of an objective in an operation of driving a vehicle (5) according to claim 1, **characterised in that** the first concentric surface (331) is closest to the geometric centre of the first area (33).

4. Method for the presentation of information (2) relating to the accomplishment of an objective in an operation of driving a vehicle (5) according to claims 1 and 2, **characterised in that** the application of a state on the first surface (331) based on the average parameter (105), the first predefined value (101) and the third predefined value (103), and the application of a state on the second surface (332) based on the third predefined value (103), are periodically repeated based on a third predefined value (103).

5. Method for the presentation of information (2) relating to the accomplishment of an objective in an operation of driving a vehicle (5) according to claim 1, **characterised in that** a second area (32) and/or a third area (31) are concentric with the first area (33) about a geometric centre (30).

6. Method for the presentation of information (2) relating to the accomplishment of an objective in an operation of driving a vehicle (5) according to claim 5, **characterised in that** the third area (31) is the closest to the geometric centre (30) and the first area (33) is the most distant from the geometric centre (30).

7. Method for the presentation of information (2) relating to the accomplishment of an objective in an operation of driving a vehicle (5) according to claim 5, **characterised in that** the second area (32) comprises a radial band (321) being displaced in a clockwise direction across the surface (32) in a manner proportional to the second predefined value (102).

8. Method for the presentation of information (2) relating to the accomplishment of an objective in an operation of driving a vehicle (5) according to claim 7, **characterised in that** a commencement and an end of the displacement of the radial band (321) are coincident.

9. Method for the presentation of information (2) relating to the accomplishment of an objective in an operation of driving a vehicle (5) according to claim 7, **characterised in that** the radial band (321) comprises a degradation.

10. Method for the presentation of information (2) relating to the accomplishment of an objective in an operation of driving a vehicle (5) according to claim 5, **characterised in that** the third area (31) comprises the instantaneous parameter (100) of the vehicle (5).

11. Method for the presentation of information (2) relating to the accomplishment of an objective in an operation of driving a vehicle (5) according to claim 1, **characterised in that** the information (2) comprises additionally a number of accomplishments (6) realised.

12. Method for the presentation of information (2) relating to the accomplishment of an objective in an operation of driving a vehicle (5) according to claim 1, **characterised in that** the information (2) comprises additionally an access to a main menu (9) and/or an access to a previous screen (10) and/or an access to cancel (11) the course of the accomplishment.
